# EUROPEAN PATENT SPECIFICATION

(11) **EP 3 343 189 B1**
(45) Date of publication and mention of the grant of the patent: **17.02.2021**
(21) Application number: 17208616.7
(22) Date of filing: 19.12.2017
(51) Int. Cl.: G01G 21/28, G01G 23/04

(54) **ELECTRONIC BALANCE**
ELEKTRONISCHE WAAGE
BALANCE ÉLECTRONIQUE

(30) Priority: 28.12.2016 JP 2016255087
(43) Date of publication of application: 04.07.2018
(73) Proprietor: Shimadzu Corporation, Kyoto-shi, Kyoto 604-8511 (JP)
(72) Inventor: IIZUKA, Atsushi, Kyoto-shi, Kyoto 6048511 (JP); KAWAI, Masayuki, Tokyo, Tokyo 1070052 (JP); YAMAMOTO, Isao, Kyoto-shi, Kyoto 6048511 (JP)
(74) Representative: Mewburn Ellis LLP

(56) References cited:
- DE-C1- 3 601 408
- GB-A- 2 093 599

## Description

### TECHNICAL FIELD

The present invention relates to an electronic balance that includes a weighing pan on which a sample is placed and which is provided inside a main body of the electronic balance.

### BACKGROUND

Conventionally, an electronic balance has been used that includes a main body in which a weighing chamber is formed, and a weighing pan which is disposed in the weighing chamber. In the electronic balance, a sample is placed on the weighing pan, and the sample is weighed in a state where the weighing chamber is stable. As an electronic balance of this type, an electronic balance capable of measuring very small mass has been also used.

In such an electronic balance, an air flow may be generated in the main body (inside the weighing chamber) due to heat from various electrical components accommodated in the main body or heat of the sample itself. The air flow affects weighing accuracy of the electronic balance. In particular, as the mass of the sample to be weighed is smaller, the air flow more greatly affects the weighing accuracy. Therefore, from the viewpoint of improving accuracy, it is important to prevent the air flow from reaching the weighing pan.

For example, it is possible to reduce a range of an air flow generated by heat from various electrical components in the electronic balance by changing arrangement of the various electrical components, and to reduce influence of the air flow on weighing (for example, see JP 5479955 B1).

### Prior Art Documents

Patent Document 1: GB2093599-A
Patent Document 2: DE3601408-C1

### SUMMARY OF THE INVENTION

The conventional electronic balance as described above has a problem that a considerable amount of air flow reaching a sample placement surface (upper surface) of the weighing pan is generated, which adversely affects the weighing accuracy to a certain extent. Specifically, in the conventional electronic balance, a cell and wires are accommodated below the weighing chamber, and heat generated from the cell and the wires causes a lower surface (bottom surface) of the weighing chamber to have heat. In addition, the weighing pan is disposed above the lower surface of the weighing chamber. Therefore, there is a problem that an air flow directed upward from the lower surface of the weighing chamber is generated and the air flow reaches the weighing pan, which adversely affects the weighing accuracy. In addition, since arrangement of the various electrical components is changed, there is also a problem that the configuration inside the electronic balance becomes complicated.

The present invention has been made in view of the above circumstances, and an object of the present invention is to provide an electronic balance capable of improving weighing accuracy with a simple configuration.
(1) An electronic balance according to the present invention is disclosed according to claim 1.
   According to such a configuration, the weighing pan is disposed so as to face the opening of the bottom wall, and the placement surface of the weighing pan is disposed lower than the bottom surface of the weighing chamber configured of the bottom wall.
   Therefore, even if the bottom surface of the weighing chamber has heat due to heat from various electrical components or the like and an air flow is generated by the heat, the air flow goes upward in the weighing chamber without reaching the placement surface of the weighing pan.
   As a result, it is possible to suppress an adverse effect on the weighing accuracy caused by the air flow.
   In addition, such an effect can be realized by a simple configuration where the bottom surface of the weighing chamber configured of the bottom wall is disposed higher than the placement surface of the weighing pan.
   That is, according to the electronic balance of the present invention, the weighing accuracy can be improved with a simple configuration.
(2) In addition, the main body may include a lower case provided at a bottom portion of the main body and accommodating the electrical components inside. A gap may be formed between the weighing chamber and the lower case by disposing the bottom wall above an upper surface of the lower case at a distance from the upper surface.
   According to such a configuration, even if the upper surface of the lower case has heat due to an influence of the electrical components, since the bottom wall is disposed above the upper surface of the lower case at a distance from the upper surface, it is possible to inhibit the bottom wall from having heat.
   Therefore, it is possible to suppress an adverse effect on the weighing accuracy caused by heat from the electrical components, without changing arrangement of the electrical components.
   According to the invention, the electronic balance includes an accommodating wall. The accommodating wall is located in the opening of the bottom wall and surrounds an outer periphery and a lower side of the weighing pan so as to accommodate the weighing pan inside.
   According to the invention, the periphery of the weighing pan is surrounded by the accommodating wall, and an air flow directed toward the weighing pan can be blocked by the accommodating wall.
   Therefore, it is possible to further suppress an adverse effect on the weighing accuracy caused by the air flow.
(3) In addition, the weighing pan may be provided with a support shaft protruding downward. A first insertion hole into which the support shaft is inserted may be formed on the upper surface of the lower case. A second insertion hole into which the support shaft is inserted and which has an opening area smaller than an opening area of the first insertion hole may be formed in the accommodating wall.
   According to such a configuration, by inserting the support shaft of the weighing pan into the second insertion hole, an air flow passing through the first insertion hole of the lower case and going upward can be blocked by the accommodating wall.
   Therefore, it is possible to further suppress an adverse effect on the weighing accuracy caused by the air flow.
(4) In addition, the bottom wall and the accommodating wall may be integrally formed.

According to such a configuration, the bottom wall and the accommodating wall can be easily configured.

According to the present invention, even if the bottom surface of the weighing chamber has heat and an air flow is generated by the heat, the air flow goes upward in the weighing chamber without reaching the placement surface of the weighing pan. Therefore, it is possible to suppress an adverse effect on the weighing accuracy caused by the air flow. In addition, such an effect can be realized by a simple configuration where the bottom surface of the weighing chamber is disposed higher than the placement surface of the weighing pan.

### BRIEF DESCRIPTION OF THE DRAWINGS

Fig. 1 is a perspective view illustrating a configuration of an electronic balance according to a first embodiment of the present invention.
Fig. 2 is a cross-sectional view taken along line A-A in Fig. 1.
Fig. 3 is a perspective view illustrating a configuration of an outer member of the electronic balance.
Fig. 4 is a perspective view illustrating a configuration of an inner member of the electronic balance.

### DETAILED DESCRIPTION OF THE PREFERRED EMBODIMENTS

### 1. Entire Configuration of Electronic Balance

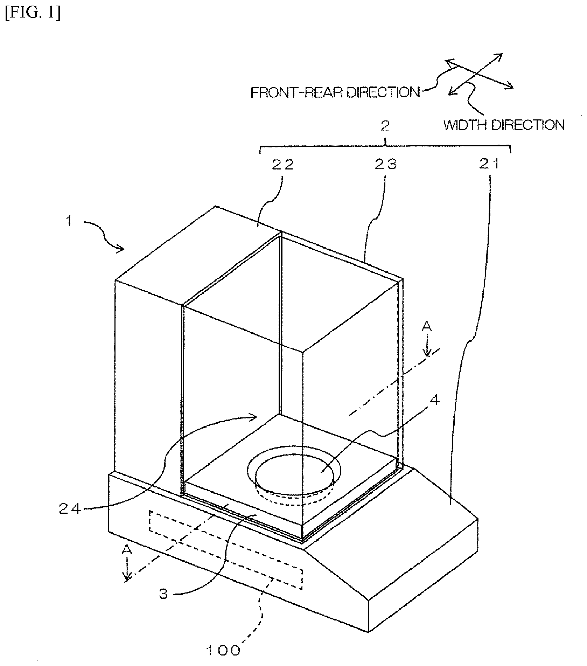

Fig. 1 is a perspective view illustrating a configuration of an electronic balance 1 according to a first embodiment of the present invention.

The electronic balance 1 is, for example, an electromagnetic force balancing type electronic balance, and weighing can be performed at high accuracy with minimum display of 0.1 mg or less. However, the electronic balance 1 is not limited to an electromagnetic force balancing type electronic balance. An electronic balance of any other type such as a load-cell type can be used.

The electronic balance 1 includes a main body 2, a bottom member 3, and a weighing pan 4.

The main body 2 constitutes a casing of the electronic balance 1, and a weighing chamber 24 to be described later is formed in the main body 2. The main body 2 includes a lower case 21, a back case 22, and a windshield case 23.

The lower case 21 is provided at a lower portion (bottom portion) of the main body 2. The lower case 21 is formed into a thick plate shape and extends in a front-rear direction. Inside the lower case 21, for example, various electrical components 100 such as a substrate, a weighing unit for weighing a sample, and a display unit for displaying a weighing value are accommodated.

The back case 22 is placed at a rear of the lower case 21. The back case 22 is formed into a rectangular parallelepiped shape extending in a vertical direction. Various components (not illustrated) are accommodated in the back case 22.

The windshield case 23 is placed at a center portion of the lower case 21 and is disposed in front of the back case 22. The windshield case 23 is formed into a hollow rectangular parallelepiped shape opened rearward and downward. The windshield case 23 is made of, for example, a glass material and is transparent or translucent. A rear end portion of the windshield case 23 is in contact with a front end portion of the back case 22. A lower end portion of the windshield case 23 is in contact with an upper end portion of the lower case 21.

The bottom member 3 is placed at the center portion of the lower case 21 and is disposed inside the windshield case 23. That is, the bottom member 3 is disposed in a space surrounded by the lower case 21, the back case 22, and the windshield case 23. The bottom member 3 is a member having a rectangular shape in plan view. Note that a configuration of the bottom member 3 will be described in detail below.

According to such a configuration, in the main body 2, the weighing chamber 24 is formed by the bottom member 3, the back case 22, and the windshield case 23.

In the weighing chamber 24, the weighing pan 4 is provided at a center portion in the front-rear direction and at a center portion in a width direction. The weighing pan 4 is made of a metallic material and formed into a disc shape. As will be described in detail later, in the weighing chamber 24, the weighing pan 4 is accommodated in the bottom member 3 and faces an internal space of the weighing chamber 24.

A side surface or a front surface of the windshield case 23 is an opening and closing door, not illustrated. The weighing chamber 24 can be opened and closed by sliding the opening and closing door. In a case of weighing a sample with the electronic balance 1, an operator first slides the opening and closing door of the windshield case 23 to open the weighing chamber 24, and places the sample on the weighing pan 4. Then, the operator slides the opening and closing door of the windshield case 23 to close the weighing chamber 24, and starts weighing of the sample in a state where the weighing chamber 24 is stable. Then, the operator checks a numerical value (weighed content) displayed on the display unit, not illustrated.

### 2. Detailed Configuration of Bottom Member, Weighing Pan and Lower Case

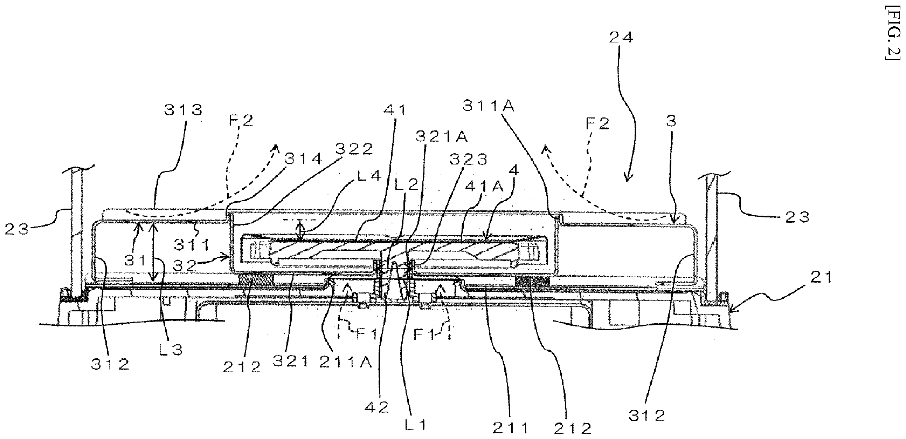

Fig. 2 is a cross-sectional view taken along line A-A in Fig. 1.

The bottom member 3 includes an outer member 31 and an inner member 32.

The outer member 31 is disposed in an outer portion in the weighing chamber 24 in a state where the bottom member 3 is disposed in the weighing chamber 24.

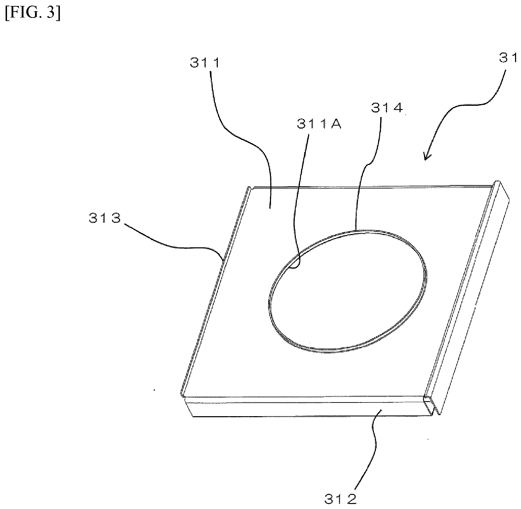

Fig. 3 is a perspective view illustrating a configuration of the outer member 31.

As illustrated in Figs. 2 and 3, the outer member 31 is formed into a rectangular shape in plan view and is made of a metallic material. The outer member 31 includes a bottom wall 311, a pair of legs 312, an end projection 313, and a center projection 314.

The bottom wall 311 is formed into a plate shape having a rectangular shape in plan view and extends in a horizontal direction. An opening 311A is formed at a center portion of the bottom wall 311. The opening 311A is circular in plan view and penetrates the bottom wall 311 in a vertical direction. Note that the opening 311A is an example of an opening.

The pair of legs 312 is provided at both end portions of the bottom wall 311. Each of the legs 312 is formed into a plate shape having an L shape in side view and extends downward from the end portion of the bottom wall 311 and then extends inward.

The end projection 313 is formed at one of the end portions of the bottom wall 311 which are not provided with the leg 312. The end projection 313 is formed into a linear shape in plan view and projects upward from the end portion of the bottom wall 311.

The center projection 314 is formed at the center portion of the bottom wall 311. Specifically, the center projection 314 is formed at an edge portion of the opening 311A of the bottom wall 311. The center projection 314 is formed into an annular shape in plan view and projects upward from the bottom wall 311.

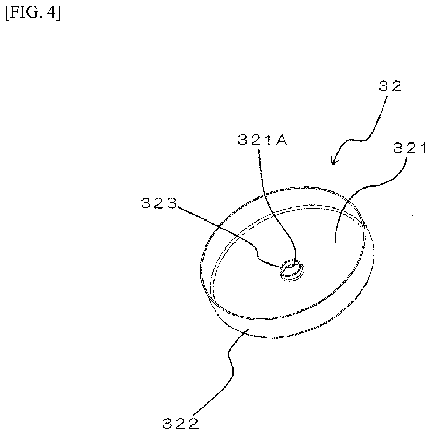

Fig. 4 is a perspective view illustrating a configuration of the inner member 32.

As illustrated in Figs. 2 and 4, the inner member 32 is formed into a circular shape in plan view and is made of a metallic material. The inner member 32 includes a lower wall 321, a side wall 322, and a protrusion 323.

The lower wall 321 is formed into a disc shape and extends in the horizontal direction. An opening 321A is formed at a center portion of the lower wall 321. The opening 321A is circular in plan view and penetrates the lower wall 321 in the vertical direction. The opening 321A is an example of a second insertion hole.

The side wall 322 is provided on a peripheral edge of the lower wall 321. Specifically, the side wall 322 is annular in plan view, and is formed into a plate shape protruding upward from the peripheral edge of the lower wall 321. The side wall 322 constitutes an example of an accommodating wall together with the lower wall 321.

The protrusion 323 is formed at the center portion of the lower wall 321. Specifically, the protrusion 323 is annular in plan view, and is formed into a plate shape extending upward from an edge portion of the opening 321A of the lower wall 321.

As illustrated in Fig. 2, the weighing pan 4 includes a disc portion 41 and a support shaft 42.

The disc portion 41 is formed into a disc shape having a predetermined thickness. An upper surface of the disc portion 41 is a placement surface 41A on which a sample is placed.

The support shaft 42 is formed into a partially cutout cylindrical shape, and protrudes downward from a center portion of a lower surface of the disc portion 41.

An upper surface 211 of the lower case 21 is formed into a flat-plate shape. An opening 211A is formed at a center portion of the upper surface 211 of the lower case 21. The opening 211A is circular in plan view and penetrates the upper surface 211 of the lower case 21 in the vertical direction. A diameter L1 of the opening 211A of the upper surface 211 of the lower case 21 is larger than a diameter L2 of the opening 321A of the lower wall 321 of the inner member 32 (bottom member 3). That is, an opening area of the opening 321A of the lower wall 321 of the inner member 32 (bottom member 3) is smaller than an opening area of the opening 211A of the upper surface 211 of the lower case 21. Note that the opening 211A is an example of a first insertion hole.

An elastic body 212 is provided on a bottom surface of the lower wall 321 of the inner member 32. The elastic body 212 is made of a rubber material.

### 3. Attachment of Bottom Member and Weighing Pan to Main Body

When the bottom member 3 and the weighing pan 4 described above are attached to the main body 2, an operator first opens the opening and closing door of the windshield case 23 (see Fig. 1) of the main body 2.

In this state, the operator places the outer member 31 in the weighing chamber 24 through an opened portion of the windshield case 23. At that time, the outer member 31 is placed on the upper surface 211 of the lower case 21 via elastic bodies provided on bottom surfaces of the legs 312, and thus is placed in the weighing chamber 24. In addition, the outer member 31 is disposed in the weighing chamber 24 such that the end projection 313 faces the back case 22. The bottom wall 311 of the outer member 31 is disposed above the upper surface 211 of the lower case 21 at a distance from the upper surface 211. A gap is formed between the bottom wall 311 of the outer member 31 and the upper surface 211 of the lower case 21, that is, between the weighing chamber 24 and the upper surface 211 of the lower case 21. Specifically, a distance L3 from the upper surface 211 of the lower case 21 to the bottom wall 311 of the outer member 31 in the vertical direction is, for example, about 20 mm.

Further, the operator disposes the inner member 32 inside the opening 311A of the bottom wall 311 of the outer member 31. At that time, the inner member 32 is placed on the upper surface 211 of the lower case 21 via the elastic body 212 provided on the bottom surface of the lower wall 321, and thus is placed inside the opening 311A. In order to reduce influence of static electricity of a sample and influence of an electromagnetic wave hitting the weighing pan 4, the elastic body 212 preferably has conductivity. In this state, an upper edge of the side wall 322 of the inner member 32 is located close to the peripheral edge of the opening 311A of the outer member 31.

Then, the operator accommodates the weighing pan 4 in the inner member 32. Specifically, the support shaft 42 of the weighing pan 4 is inserted into the opening 321A of the lower wall 321 (inner member 32). At that time, the weighing pan 4 faces the opening 311A of the bottom wall 311 of the outer member 31.

In this state, the periphery (the outer periphery and the lower side) of the weighing pan 4 is surrounded by the inner member 32, and the placement surface 41A of the disc portion 41 of the weighing pan 4 is disposed lower than the bottom wall 311 of the outer member 31 of the bottom member 3. In other words, the bottom wall 311 of the outer member 31 of the bottom member 3 forms a bottom surface of the weighing chamber 24 at a location higher than the placement surface 41A of the disc portion 41 of the weighing pan 4. In addition, a distance L4 from the placement surface 41A of the disc portion 41 of the weighing pan 4 to the bottom wall 311 of the outer member 31 in the vertical direction is, for example, about 5 mm.

As described, the operator disposes the bottom member 3 and the weighing pan 4 in the weighing chamber 24. Then, upon weighing, the operator places a sample on the placement surface 41A of the weighing pan 4. At that time, in a case where the sample spills over the bottom member 3, the sample is blocked by the end projection 313 and the center projection 314, and the sample is prevented from entering an inside of a mechanical portion. As described, the end projection 313 and the center projection 314 function as wall members that prevent the sample from entering the inside of the mechanical portion when the sample spills out of the weighing pan 4.

### 4. Air Flow Generated in Main Body

As described above, the electrical components 100 (see Fig. 1) are accommodated in the lower case 21 of the main body 2. Therefore, due to heat generated from the electrical components 100, an air flow F1 directed upward from an inside of the lower case 21 is generated within the main body 2. After the air flow F1 passes through the opening 211A in the upper surface 211 of the lower case 21 and goes upward, the air flow F1 is blocked by the lower wall 321 of the inner member 32 of the bottom member 3. That is, the air flow F1 directed upward from the inside of the lower case 21 is blocked by the lower wall 321 of the inner member 32 of the bottom member 3.

In addition, the bottom wall 311 of the outer member 31 of the bottom member 3 constituting the bottom surface of the weighing chamber 24 is disposed above the upper surface 211 of the lower case 21 at a distance (distance L3) from the upper surface 211. Therefore, the bottom wall 311 of the outer member 31 is inhibited from having heat due to heat from the electrical components 100 in the lower case 21. In addition, in a case where the bottom wall 311 of the outer member 31 has slight heat, an air flow F2 directed upward from the bottom wall 311 of the outer member 31 is generated by the heat. However, the placement surface 41A of the disc portion 41 of the weighing pan 4 is disposed lower than the bottom wall 311. Therefore, even if the air flow F2 is generated, the air flow F2 is prevented from reaching the placement surface 41A of the disc portion 41 of the weighing pan 4.

In addition, in a case where an air flow directed to the opening 311A is generated in a vicinity of an upper surface of the bottom wall 311 of the outer member 31, the center projection 314 blocks movement of the air flow toward the center portion of the bottom wall 311.

As described, in the electronic balance 1, an air flow generated in the main body 2 is prevented from reaching the placement surface 41A of the disc portion 41 of the weighing pan 4.

As a result of weighing a sample of 100 g using this electronic balance 1, it was confirmed that fluctuation of the weighing numerical value was approximately within 0.04 mg, not illustrated.

### 5. Operation and Effect

(1) According to the present embodiment, in the electronic balance 1, the placement surface 41A of the disc portion 41 of the weighing pan 4 is disposed lower than the bottom wall 311 of the outer member 31 of the bottom member 3.
   Therefore, even if the bottom wall 311 of the outer member 31 has heat due to heat from the electrical components 100 accommodated in the lower case 21 and the air flow F2 is generated by the heat, the air flow F2 goes upward in the weighing chamber 24 without reaching the placement surface 41A of the disc portion 41 of the weighing pan 4.
   As a result, it is possible to suppress an adverse effect on weighing accuracy caused by the air flow F2.
   In addition, such an effect can be realized by a simple configuration where the bottom wall 311 of the outer member 31 is disposed higher than the placement surface 41A of the disc portion 41 of the weighing pan 4.
   That is, according to the electronic balance 1, the weighing accuracy can be improved with a simple configuration.
(2) In addition, the bottom wall 311 of the outer member 31 of the bottom member 3 is disposed above the upper surface 211 of the lower case 21 in which the electrical components 100 are accommodated, at the distance L3 from the upper surface 211. That is, a gap is formed between the weighing chamber 24 and the upper surface 211 of the lower case 21.
   Therefore, even if the upper surface 211 of the lower case 21 has heat due to the influence of the electrical components 100, the gap between the weighing chamber 24 and the upper surface 211 of the lower case 21 can inhibit the bottom wall 311 of the outer member 31 from having heat.
   Therefore, it is possible to suppress an adverse effect on the weighing accuracy caused by heat from the electrical components 100, without changing arrangement of the electrical components 100.
(3) In addition, in the electronic balance 1, the periphery of the weighing pan 4 is surrounded by the inner member 32. Specifically, the outer periphery and the lower side of the weighing pan 4 are surrounded by the inner member 32.
   Therefore, the inner member 32 can block the air flow F1 directed toward the weighing pan 4.
   As a result, it is possible to further suppress an adverse effect on the weighing accuracy caused by the air flow F1.
(4) In addition, in the electronic balance 1, since the support shaft 42 of the weighing pan 4 is inserted into the opening 321A in the lower wall 321 of the inner member 32 having the opening area smaller than the opening area of the opening 211A in the upper surface 211 of the lower case 21, the air flow F1 directed upward from inside the lower case 21 passes through the opening 211A in the upper surface 211 of the lower case 21 and then is blocked by the lower wall 321 of the inner member 32 of the bottom member 3.

Therefore, it is possible to further suppress an adverse effect on the weighing accuracy caused by the air flow F1.

### 6. Second Embodiment

According to the first embodiment described above, in the bottom member 3, the outer member 31 and the inner member 32 are configured as separate members. In contrast, as a second embodiment, it is also possible to integrally form an outer member 31 and an inner member 32 in a bottom member 3.

According to such a configuration, the outer member 31 and the inner member 32 can be easily configured.

### 7. Modification

The distance L3 from the upper surface 211 of the lower case 21 to the bottom wall 311 of the outer member 31 and the distance L4 from the placement surface 41A of the disc portion 41 of the weighing pan 4 to the bottom wall 311 of the outer member 31 can be variously changed. As each of the distance L3 and distance L4 is greater, an air flow generated in the main body 2 can be further inhibited from reaching the placement surface 41A of the disc portion 41 of the weighing pan 4. Therefore, it is possible to further suppress an adverse effect on the weighing accuracy caused by the air flow.

### DESCRIPTION OF REFERENCE NUMERALS

- 1: Electronic balance
- 2: Main body
- 3: Bottom member
- 4: Weighing pan
- 21: Lower case
- 24: Weighing chamber
- 31: Outer member
- 32: Inner member
- 41A: Placement surface
- 42: Support shaft
- 211: Upper surface
- 211A: Opening
- 311: Bottom wall
- 321: Lower wall
- 321A: Opening
- 322: Side wall
- 100: Electrical component

## Claims

1. An electronic balance (1) comprising:
a main body (2) in which a weighing chamber (24) is formed;
a weighing pan (4) which is provided in the weighing chamber (24) and includes a placement surface (41A) on which a sample is placed;
a bottom wall (311) which forms a bottom surface of the weighing chamber (24) at a location higher than the placement surface (41A) and in which an opening (311A) is formed at a location facing the weighing pan; and
an accommodating wall (322), which is located in the opening (311A) of the bottom wall (311) and surrounds an outer periphery and a lower side of the weighing pan so as to accommodate the weighing pan inside.

2. The electronic balance according to claim 1, wherein
the main body includes a lower case (21) which is provided at a bottom portion of the main body and in which an electrical component is accommodated, and
the bottom wall (311) is disposed above an upper surface (211) of the lower case (21) at a distance from the upper surface of the lower case, so that a gap is formed between the weighing chamber and the lower case.

3. The electronic balance according to claim 2, wherein
a support shaft (42) which protrudes downward is provided on the weighing pan,
a first insertion hole into which the support shaft is inserted is formed in the upper surface of the lower case (21), and
a second insertion hole into which the support shaft is inserted is formed in the accommodating wall (322), the second insertion hole having an opening area that is smaller than an opening area of the first insertion hole.

4. The electronic balance according to any one of claims 1 to 3, wherein the bottom wall (311) and the accommodating wall (322) are integrally formed.

## Patentansprüche

1. Elektronische Waage (1), umfassend:
einen Hauptkörper (2), in dem eine Wägekammer (24) ausgebildet ist;
eine Wägeschale (4), die in der Wägekammer (24) bereitgestellt ist und eine Auflagefläche (41A) umfasst, auf die eine Probe aufgelegt wird;
eine Bodenwand (311), die an einer Position, die höher als die Auflagefläche (41A) ist, eine Bodenfläche der Wägekammer (24) bildet und in der eine Öffnung (311A) an einer Position, die der Wägeschale zugewandt ist, gebildet ist, und
eine Aufnahmewand (322), die in der Öffnung (311A) der Bodenwand (311) positioniert ist und einen Außenumfang und eine Unterseite der Wägeschale derart umgibt, um die Wägeschale im Inneren aufzunehmen.

2. Elektronische Waage nach Anspruch 1, wobei
der Hauptkörper ein unteres Gehäuse (21) umfasst, das an einem Bodenabschnitt des Hauptkörpers bereitgestellt ist und in dem eine elektrische Komponente aufgenommen ist, und
die Bodenwand (311) über einer oberen Fläche (211) des unteren Gehäuses (21) in einem Abstand zu der oberen Fläche des unteren Gehäuses angeordnet ist, sodass zwischen der Wägekammer und dem unteren Gehäuse ein Spalt gebildet ist.

3. Elektronische Wage nach Anspruch 2, wobei
eine Stützwelle (42), die nach unten vorsteht, auf der Wägeschale bereitgestellt ist,
ein erstes Einsetzloch, in das die Stützwelle eingesetzt ist, in der oberen Fläche des unteren Gehäuses (21) gebildet ist, und
ein zweites Einsetzloch, in das die Stützwelle eingesetzt ist, in der Aufnahmewand (322) gebildet ist, wobei das zweite Einsetzloch einen Öffnungsbereich aufweist, der kleiner als ein Öffnungsbereich des ersten Einsetzlochs ist.

4. Elektronische Wage nach einem der Ansprüche 1 bis 3, wobei die Bodenwand (311) und die Aufnahmewand (322) einstückig ausgebildet sind.

## Revendications

1. Balance électronique (1) comprenant :
un corps principal (2) dans lequel une chambre de pesée (24) est formée ;
un plat de pesée (4) qui est agencé dans la chambre de pesée (24) et comprend une surface de placement (41A) sur laquelle un échantillon est placé ; et
une paroi inférieure (311) qui forme une surface inférieure de la chambre de pesée (24) à un emplacement plus haut que la surface de placement (41A) et dans laquelle une ouverture (311A) est formée à un emplacement faisant face au plat de pesée ; et
une paroi de logement (322), qui est située dans l'ouverture (311A) de la paroi inférieure (311) et entoure une périphérie extérieure et un côté inférieur du plat de pesée de manière à loger le plat de pesée à l'intérieur.

2. Balance électronique selon la revendication 1, dans laquelle
le corps principal comprend un boîtier inférieur (21) qui est agencé au niveau d'une partie inférieure du corps principal et dans lequel un composant électrique est logé, et la paroi inférieure (311) est disposée au-dessus d'une surface supérieure (211) du boîtier inférieur (21) à une distance de la surface supérieure du boîtier inférieur, de sorte qu'un espace est formé entre la chambre de pesée et le boîtier inférieur.

3. Balance électronique selon la revendication 2, dans laquelle
un arbre de support (42) qui fait saillie vers le bas est agencé sur le plat de pesée,
un premier trou d'insertion dans lequel est inséré l'arbre de support est formé dans la surface supérieure du boîtier inférieur (21), et
un second trou d'insertion dans lequel est inséré l'arbre de support est formé dans la paroi de logement (322), le second trou d'insertion ayant une surface d'ouverture qui est plus petite qu'une surface d'ouverture du premier trou d'insertion.

4. Balance électronique selon l'une quelconque des revendications 1 à 3, dans laquelle la paroi inférieure (311) et la paroi de logement (322) sont formées d'un seul tenant.
